# EUROPÄISCHE PATENTSCHRIFT

(11) **EP 0 845 489 B1**
(45) Veröffentlichungstag und Bekanntmachung des Hinweises auf die Patenterteilung: **03.10.2007**
(21) Anmeldenummer: 97119383.4
(22) Anmeldetag: 06.11.1997
(51) Int. Cl.: C08G 77/22, C09D 183/08

(54) **Verwendung eines Mittels enthaltend Polysiloxane als Antistatikmittel zur Herstellung von antistatischen Beschichtungen**
Use of an agent containing polysiloxanes as antistatic agent for the production of antistatic coatings
Utilisation d'un agent comprenant des polysiloxanes comme agent antistatique pour la fabrication de revêtements antistatiques

(30) Priorität: 27.11.1996 DE 19649183
(43) Veröffentlichungstag der Anmeldung: 03.06.1998
(73) Patentinhaber: Fraunhofer-Gesellschaft zur Förderung der angewandten Forschung e.V., 80686 München (DE)
(72) Erfinder: Rose, Klaus, Dr., 97318 Kitzingen (DE); Amberg-Schwab, Sabine, Dr., 97250 Erlabrunn (DE)
(74) Vertreter: Pfenning, Meinig & Partner GbR

(56) Entgegenhaltungen:
- EP-A- 0 072 435
- EP-A- 0 327 796
- EP-A- 0 491 144
- EP-A- 0 819 744
- WO-A-95/11280
- DE-A- 3 835 968
- US-A- 5 091 468

## Beschreibung

Verwendung eines Mittels enthaltend Polysiloxane als zur Herstellung von antistatischen Beschichtungen

Die Erfindung betrifft die Verwendung eines Mittels als Antistatlkmittel zur Herstellung von antistatischen Beschichtungen.

Kunststoffe sind von Natur aus gute Isolatoren mit Oberflächenwiderstönden 10¹⁴ Ω und sie besitzen aufgrund ihres hohen spezifischen elektrischen Widerstandes die Eigenschaft, elektrische Ladungen an ihrer Oberfläche zu akkumulieren. Dies führt zu statischen Aufladungen, die besonders stark bei Reibbeanspruchung auftreten. Dies ist in der Regel unerwünscht, da dadurch z.B. Staubpartikel angezogen und an der Oberfläche festgehalten werden. Die Anwesenheit dieser Partikel führt einerseits zur Verschmutzung, andererseits, aufgrund der Schrniergelwirkung beim Reinigen, zu verkratzten Oberflächen. Man versucht deshalb seit langem, durch verschiedenste Maßnahmen die Aufladung der Oberfläche vorübergehend oder auf Dauer zu verhindern. Wird der Oberflächenwiderstand durch elektrisch leitfähige Stoffe auf einen Bereich von 10⁶ bis 10¹¹ Ω erniedrigt, kann die elektrische Ladung kontrolliert abfließen (K.-H. Kochem, H.-U, ter Meer, H. Millauer, Kunststoffe 82 (1992) 575).

Um die unerwünschte Aufladung von Kunststoffen zu verhindern oder um eine rasche Entladung der Oberfläche zu bewirken, werden in der Praxis unterschiedliche Antistatika eingesetzt (Ullmanns Enzyklopädie der techn. Chemie, 4. Auflage (1978), Bd. 15), Man unterscheidet dabei interne und externe Antistatika.

Interne Antistatika sind Bestandteil der Kunststoffrezeptur. Sie diffundieren nach einiger Zeit an die Kunstsfoffoberfläche und bilden dort einen antistatisch wirksamen Film, wobei jedoch die Gefahr des Ablösens und der Verminderung der Wirkung besteht. Es handelt sich in der Regel um hochmolekulare, langkettige Verbindungen mit polaren Gruppen, wie z.B.
- mehrwertige Alkohole, wie Glycerin oder Polyethylenglycole
- Ester aus langkettigen Fettsäuren und Polyalkoholen
- Aminoalkohole des Typs HO-CH₂-CH₂-NR-CH₂-CH₂-OH

Der Wirkungsmechanismus dieser Gruppen beruht auf der Änderung der Dielektrizitätskonstante und der elektrischen Polarisierbarkeit der Oberfläche.

Externe Antistatika werden aus wäßriger oder alkoholischer Lösung mit einem Beschichtungsverfahren als Film auf die Oberfläche aufgebracht und sind somit sofort wirksam. Der Nachteil dieser Methode besteht darin, daß die Schicht sehr leicht zu entfernen ist, und somit keine dauerhafte Wirkung erzielbar ist. Bei diesem Typ handelt es sich um ionische. Verbindungen, wie z.B. quartäre Ammoniunisalze, Sulfonate oder Phosphate. Die Ionische Struktur bewirkt eine Verringerung des Oberflächenwiderstandes durch Ionenleitfähigkeit. Hygroskopische Agenzien, wie z.B. Ammoniumsalze, bewirken die oberflächliche Adsorption von Wasser aus der Atmosphäre, wobei die Leitfähigkeit des Wassers für den antistatischen Effekt verantwortlich ist.

Aus der DE 3435841 A1 ist die Verwendung von Ethersulfonaten als Antistatika bekannt. Dabei werden wasserlösliche Salze von Sulfonsäuren, wie sie bei der Sulfonierung von Alkenylalkylpolyglycolethern der Formel R-O(-CₙH₂ₙO)ₓ-R¹ mit Schwefeltrioxid und nachfolgender Hydrolyse entstehen, als Antistatika für Kunststoffe, insbesondere für Polyamidfasern eingesetzt.

Bei Verwendung eines Antistatikmittels aus einem kationischen oder amphoteren oberflächenaktiven Agens können zwar unmittelbar nach der Behandlung ausgezeichnete antistatische Eigenschaften erzielt werden, die jedoch nicht lange beibehalten werden können. Wenn andererseits ein Antistatikmittel aus einem Urethanpolymeren oder -prepolymeren verwendet wird, können zwar die antistatischen Eigenschaften lange Zeit aufrecht erhalten werden, diese sind jedoch schlecht im Vergleich zu denjenigen des Antistatikmittels aus dem kationischen oder amphoteren oberflächenaktiven Agens.

Aus der DE 3719502 C2 ist ein Antistatikmittel bekannt, das als wesentliche Komponente ein kationisches und/oder amphoteres, wasserlösliches oder in Wasser dispergierbares und In der Wärme reaktives, blockiertes Urethanprepolymer enthält, das in seinem Molekül mindestens eine kationische Gruppe und/oder mindestens eine amphotere Gruppe sowie Isocyanat-Gruppen, die durch ein thermisch dissozilerbares Blockierungsmittel blockiert sind, aufweist. Dieses Antistatikmittel wird zur Behandlung von Fasern eingesetzt.

Aus der DE 3924200 A1 ist die Verwendung von sulfatierten Hydroxyalkyl-alkylpolyalkylenglycolethern der allgemeinen Formel R-O-(A)ₓ-CH₂-CH(OSO₃M)-R¹ als Antistatika für synthesefaserhaltige Textilfasermateriallen bekannt.

Weitere Kieselsäureartige Polymere sowie Organosiloxanverbindungen sind in EP-A-0 072 435, EP-A-0 327 786, DE 38 35 968 A und WO 95 11280 A beschrieben

Polythiophene und deren Verwendung zur antistatischen Beschichtung von Kunststoff-Formteilen und Filmfolien auf der Basis von Cellulosetriacetat, Polyethylenterephthalat oder Polycarbonat, die als Unterlagen für fotografische Filmunterlagen verwendet werden, sind aus der EP 0340512 und EP 0440957 bekannt. Ferner ist aus der DE 4211459 A1 die Herstellung einer Antistatikschicht für fotografische Materialien bekannt, bei der als antistatische Substanz ein Polythiophen verwendet wird, das durch oxidative Polymerisation des Thiophens mit mindestens 1.0 Mol Peroxysäuresalz/Mol Thiophen hergestellt wird.

Bereits aus der großen Zahl der für antistatische Zwecke vorgeschlagenen Verbindungen läßt sich erkennen, daß ein universelles, d.h. für alle Kunststoffe und Anwendungsgebiete gleichermaßen gut geeignetes Antistatikum bis heute nicht gefunden werden konnte. Vielmehr zeigen die meisten der vorgeschlagenen Verbindungen an vielen Kunststoffen Schwachen, wie mangelnde Verträglichkeit, geringe, Neigung zur Anreicherung an der Oberfläche, oder sie wirken nur unter bestimmten Bedingungen, wie etwa hoher relativer Feuchtigkeit. Andere wiederum können aufgrund ihrer toxischen Eigenschaften oder ihrer Farbe nur beschränkt eingesetzt werden.

Es bestand daher die Aufgabe, ein Antistatikum für Kunststoffe zu finden, das einen breiten Anwendungsbereich abdeckt.

Gelöst wird diese Aufgabe durch die Verwendung eines Antistatikmittel nach Anspruch 1 mit folgenden Merkmalen:
• es enthält ein oder mehrere organisch modifizierte Kieselsäure(hetero)polykandensate ;
• die Kieselsäure(hetero)polykondensate sind erholten worden durch hydrolytische (Tell)Kondensation einer oder mehrerer hydrolytisch kondensierbarer verbindungen des siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirken von Wasser oder Feuchtigkeit und gegebenenfalls In Anwesenheit eines Katalysators und/oder eines Lösungsmittels;
• 0 bis 35 Mol-% der hydrolytisch (teil) kondensierten Verbindungen, auf der Basis monomerer Verbindungen, leiten sich von Siliclurn-verbindungen der allgemeinen Formel I ab,

ZₐSIX_{b}R_{(4-a-b)} (I)

in der die Reste und Indices gleich oder verschieden sind und folgende Bedeutung haben:

| | |
|---|---|
| X = | Wasserstoff, Halogen, Hydroxy, gegebenenfalls substituiertes Alkoxy, Acyloxy, Alkylcarbonyl, Alkoxycarbonyl oder NR'₂; |
| Z = | R²₂ N-(R³-NR²-)ₖ-R³-, ¹/ₘ A^{m⊖} R²₃ N^{⊕}-R³-, (HO-R³)₂ N-R³-, Cl-SO₂-R³-, (R²O)₂ P(O)-R³-, 1/ₘ A^{m⊖} (R²₂ N)₂ C=S^{⊕}-R³-, ³/ₙ K^{n⊕} (^{⊖}OOC)₂ N-R³-N(COO^{⊖})-R³-, ¹/ₘ A^{m⊖} H₂C=C(R²)-R³-N^{⊕}(R²₂)-R³- oder ^{1/}ₘ A^{m⊖} H₂C=C(R²)-CO-O-R³-N^{⊕} (R²₂)-R³- oder davon obgeleitete quartäre Ammoniumsalze; |
| R = | gegebenenfalls substituiertes Alkyl, Alkenyl. Aryl, Alkylaryl oder Arylalkyl; |
| R¹ = | Wasserstoff, Alkyl oder Aryl; |
| R² = | Wasserstoff, gegebenenfalls substituiertes Alkyl, Alkenyl, Aryl, Alkylaryl oder Arylalkyl; |
| R³ = | gegebenenfalls substituiertes Alkylen. Alkenylen oder Arylen; |
| A^{m⊖}= | Anion mit der Ladungszahl m |
| K^{n⊕}= | Kation mit der Ladungszahl n |
| a = | 1,2 oder 3; |
| b = | 1, 2 oder 3; |
| a+b = | 2, 3 oder 4; |
| k = | 0, 1, 2 oder 3; |

• es enthält, auf der Basis monomerer Verbindungen und bezogen auf das Kleselsäure(hetero)polykondensat und die Verbindungen II und III, 0 bis 30 Mol-% einer oder mehrerer Verbindungen II, die Amine und/oder quartäre Ammonium-Verbindungen darstellen, und die jeweils einen oder mehrere organische Reste mit einer oder mehreren polymerisierbaren und/oder polyaddierbaren Gruppen tragen ;
• es enthält, auf der Basis monomerer Verbindungen und bezogen auf das Kieselsäure(hetero)polykondensat und die Verbindungen II und III, 0 bis 30 Mol-% einer oder mehrerer Verbindungen III, die Salze der, gegebenenfalls substituierten, Acrylsäure und/oder der, gegebenenfalls substituierten, Methacrylsäure darstellen ;
• die Summe der Verbindungen I, II und III beträgt, bezogen auf das Kieselsäure-(hetero)polykondensat und die Verbindungen II und III, auf der Basis monomerer Verbindungen 1 bis 30 Mol-%.

Die Silane der Formel 1 und IV sind über die Reste X hydrolysierbar und das Silan der Formel IV ist über die Reste Y polymerisierbar. Über die hydrolysierbaren Gruppen wird ein anorganisches Netzwerk mit Si-O-Si-Einheiten aufgebaut, während die im Rest Y enthaltenen C=C-Doppelbindungen bzw. Epoxid-Gruppen unter Aufbau eines organischen Netzwerkes einer Polymerisation bzw. Polyaddition unterzogen werden können. Die gegebenenfalls vorhandenen Verbindungen der allgemeinen Formeln II und III können über ihre polymerisierbaren und/oder polyaddierbaren Gruppen ebenfalls in das organische Netzwerk eingebaut werden.

Das gefunden Antistatikmittel wird gegebenenfalls mit einem Lösungsmittel verdünnt, nach üblichen Beschichtungsverfahren auf die antistatisch auszurüstende Oberfläche aufgetragen und getrocknet. Enthält das Mittel Verbindungen der allgemeinen Formel II oder III oder wurden Silane der allgemeinen Formel IV eingesetzt, so schließt sich dem Beschichtungsvorgang eine Härtung durch Polymerisation oder Polyaddition an.

Für die antistatische Wirkung der erfindungsgemäßen Antistatikmittel sind die Verbindungen I, II und III verantwortlich. Diese werden über kovalente Bindungen fest in das organisch-anorganische Netzwerk eingebaut. Im Falle der Silane der Formel I erfolgt die Verankerung im anorganischen Netzwerk und, falls die Reste R und/oder Z über polymerisierbare oder polyaddierbare Gruppen verfügen, werden sie zusätzlich auch im organischen Netzwerk fixiert. Im Falle der Verbindungen II und III erfolgt die kovalente Einbindung in das organische Netzwerk. Die Summe der Anteile der Verbindungen I, II und III in der getrockneten bzw. gehärteten Antistatikbeschichtung liegt, auf der Basis monomerer Verbindungen, zwischen 1 und 30 Mol-%.

Die gefundener Mittel bieten den großen Vorteil, daß sie zwar wie äußere Antistatika angewendet werden können, d.h. daß damit Oberflächen nachträglich mit einer Antistatikschicht versehen werden können, daß sie aber die im Stand der Technik beobachteten Nachteile des Ausdiffundierens oder des Ablösens von der Oberfläche nicht zeigen. Durch die Einbindung der antistatisch wirksamen Substanzen in ein Kleselsäure(hetero)polykondensat und durch die ausgezeichnete Haftung von kleselsdure(heteto)polykondensaten auf den unterschiedlichsten Kunststoffen wurde damit eine ausgezeichnete Haftung der antistatisch wirksamen Substanzen auf den verschiedensten Kunststoffoberflächen erreicht. Die antistatische Wirkung bleibt deutlich länger erhalten. Zusätzlich zeigen die erfindungsgemäßen Antistatikmittel noch den großen Vorteil, daß mit ihnen Kunststoffoberflächen nicht nur antistatisch, sondern auch kratzfest ausgerüstet werden können.

Die Alkyl-Reste der allgemeinen Formeln I, IV und V sowie der Verbindungen II und III sind z.B. geradkettige, verzweigte oder cyclische Reste mit 1 bis 20, Insbesondere mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n-Butyl, 1-Butyl, s-Butyl, t-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, bevorzugt mit 2 bis 10 Kohlenstoff-Atomen und vorzugsweise niedere Alkenyl-Reste mit 2 bis 6 Kohlenstoff-Atomen, wie z.B. Vinyl, Allyl und 2-Butenyl.

Bevorzugte Aryl-Reste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylen-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Proplonyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Für a ≥ 2 bzw. b=2 können die Reste X und R jeweils die selbe oder eine unterschiedliche Bedeutung haben.

Der Rest Y ist ein geradkettiger oder verzweigter organischer Rest mit mindestens einer C=C-Doppelbindung und/oder mindestens einer Epoxidgruppe. Die C=C-Doppelbindungen können z.B. in Vinyl-, Allyl-, Acryl-, und/oder Methacrylgruppen vorhanden sein. Der Rest Y weist 2 bis 50, vorzugsweise 6 bis 30 Kohlenstoffatome auf, und ohne Einschränkung der Allgemeinheit sind konkrete Beispiele: 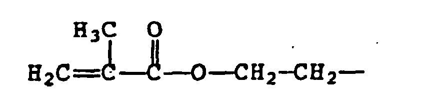 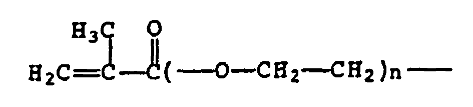 mit n = 1 bis 9 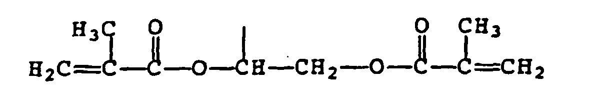 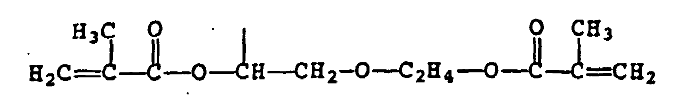 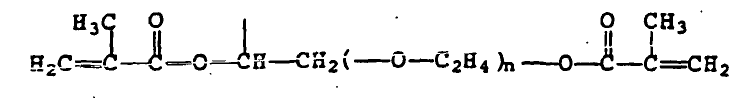 mit n = 2 - 9 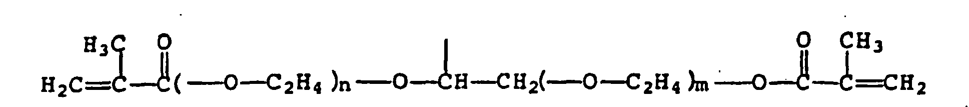 mit m = 1 - 6 und n = 1 - 6 und m+n = 2 - 8 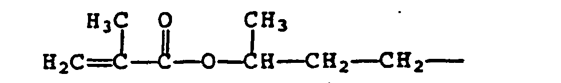 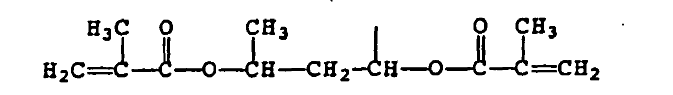 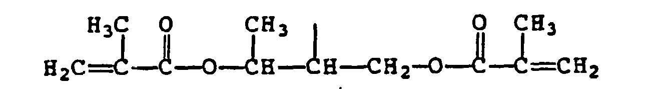 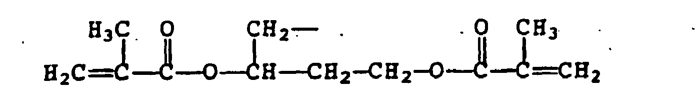 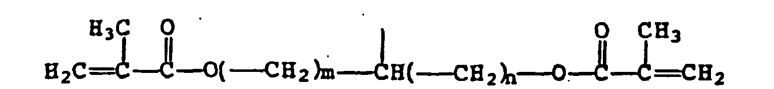 mit n und m gleich 0 bis 11 und m+n = 0 bis 11 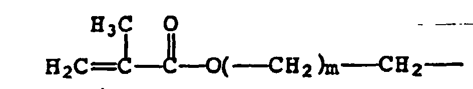 mit m =1-11 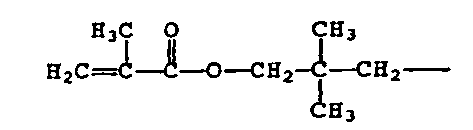 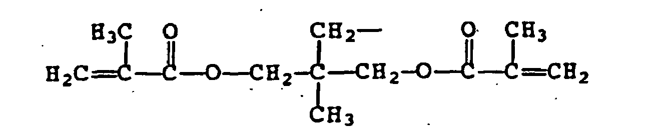 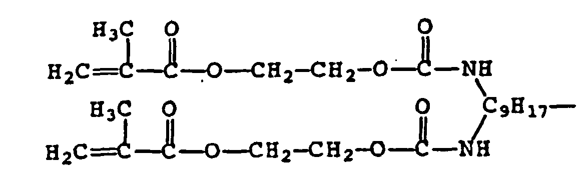 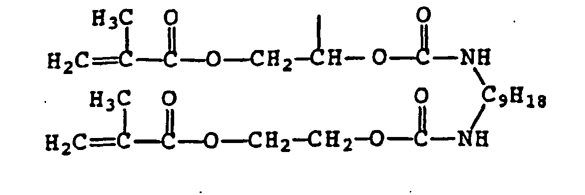 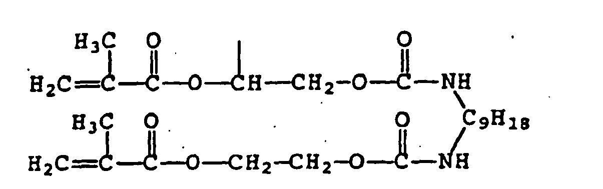 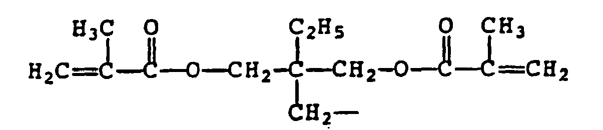 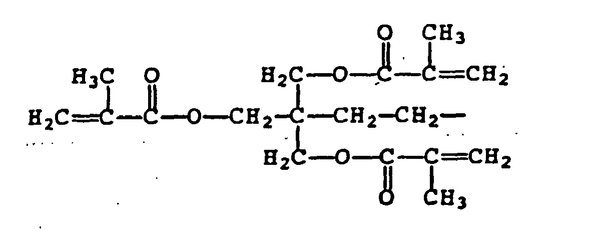 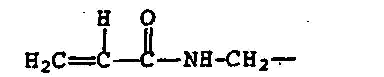 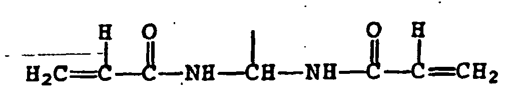 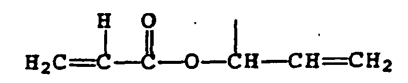 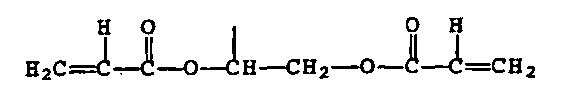 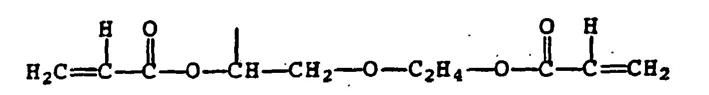 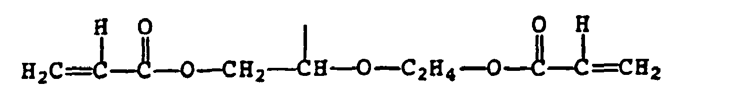 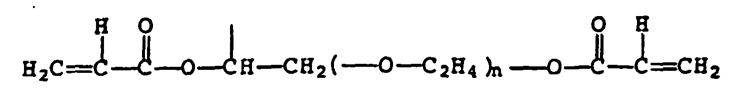 mit n = 2 - 9 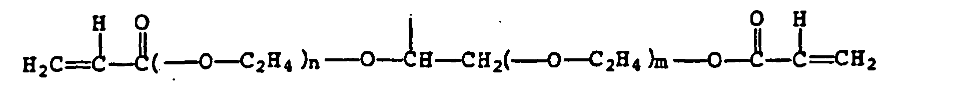 mit m = 1 - 6 und n = 1 - 6 und m+n = 2 - 8 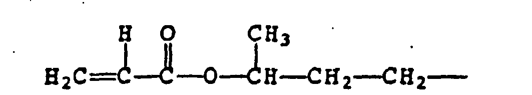 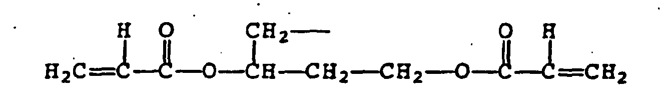 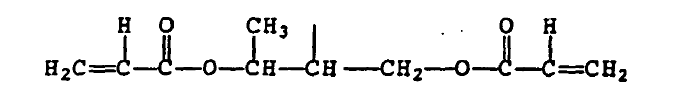 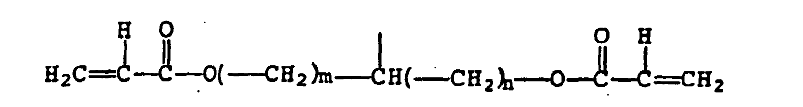 mit n und m gleich 0 bis 11 und m+n = 0 bis 11 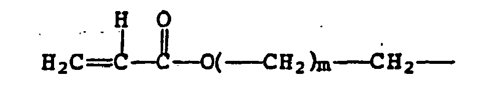 mit m = 1 - 11 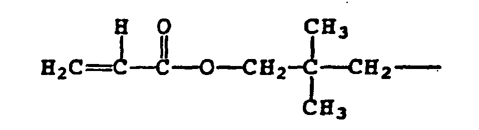 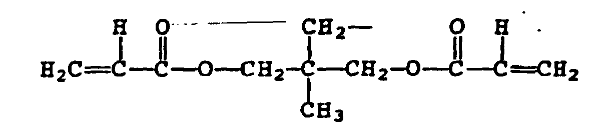 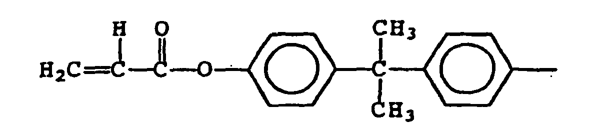 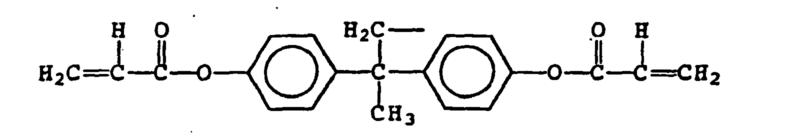 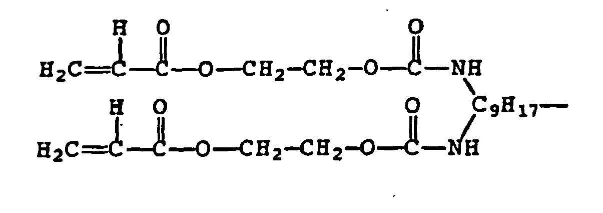 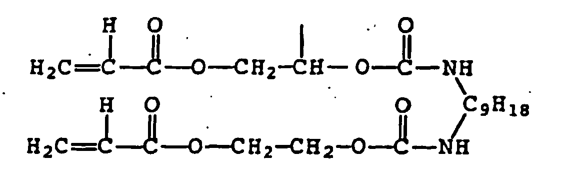 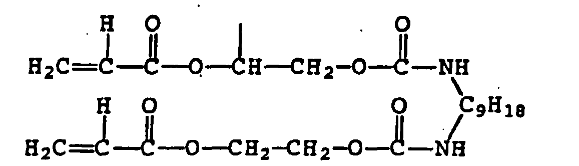 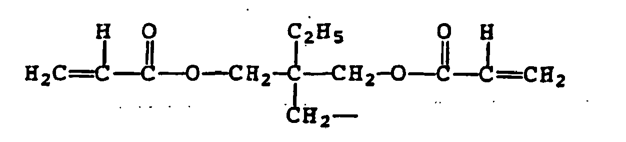 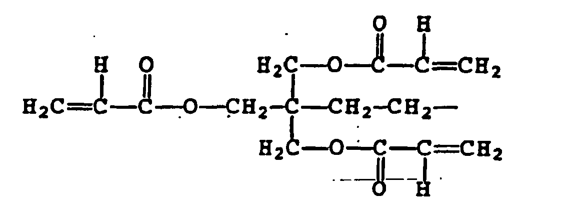 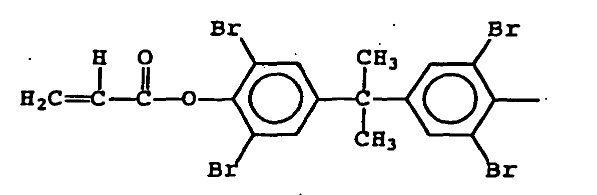 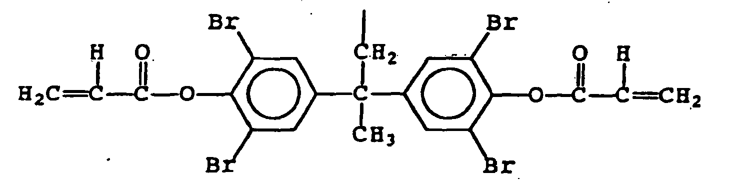 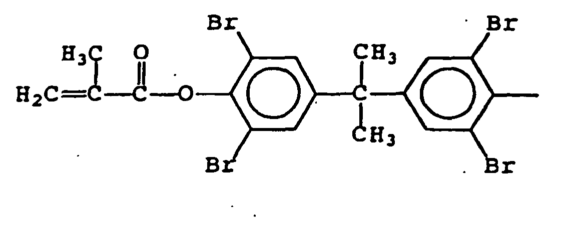 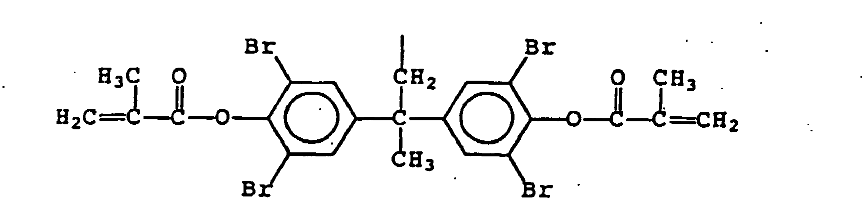 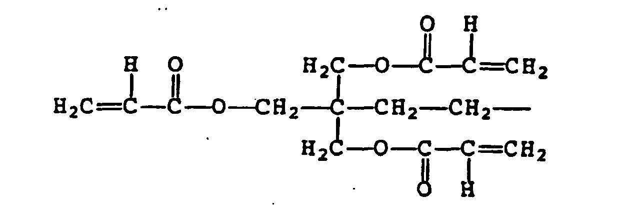 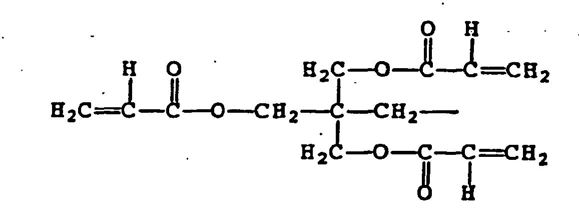 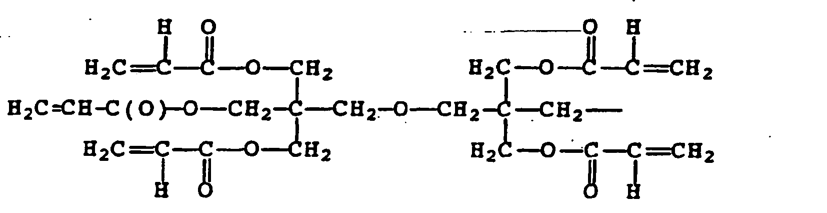 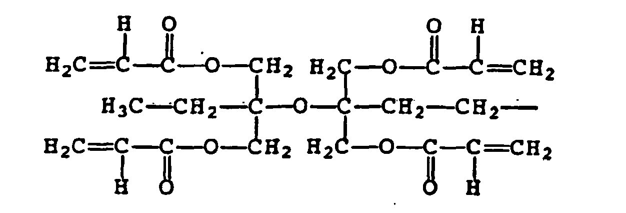 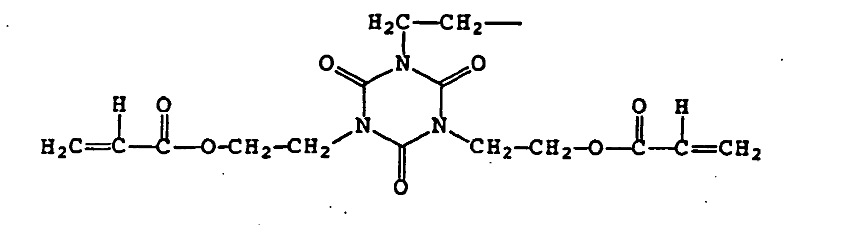 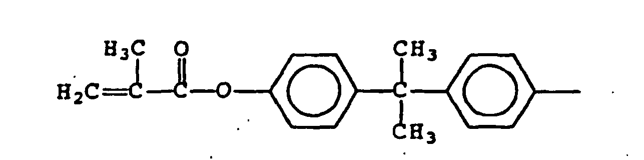 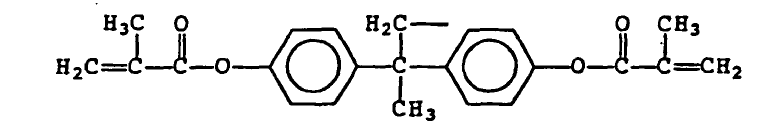 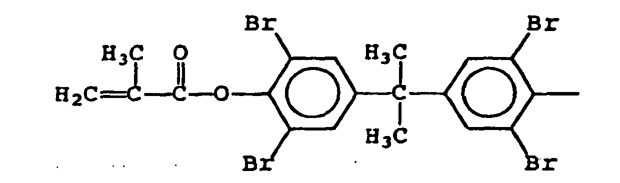 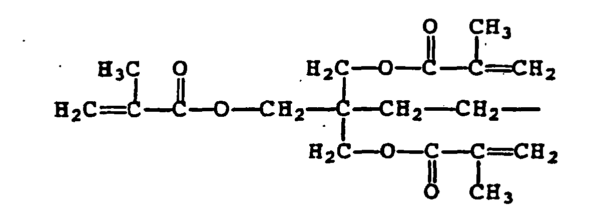 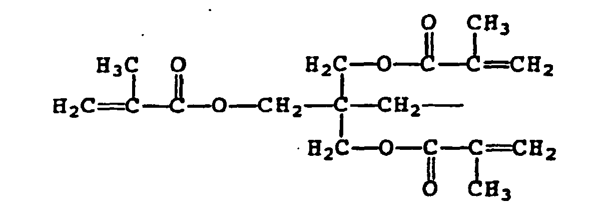 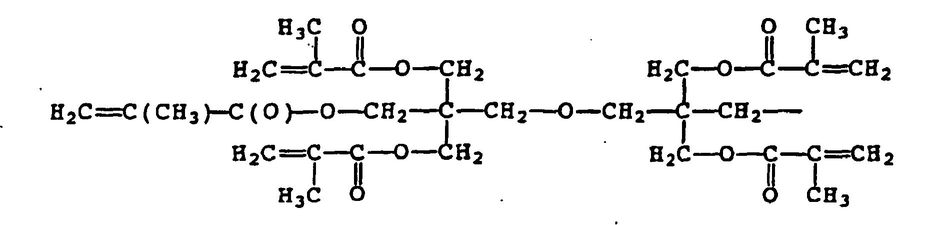 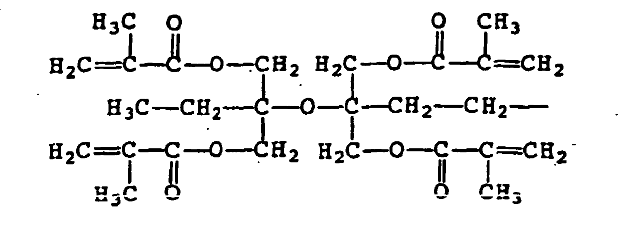 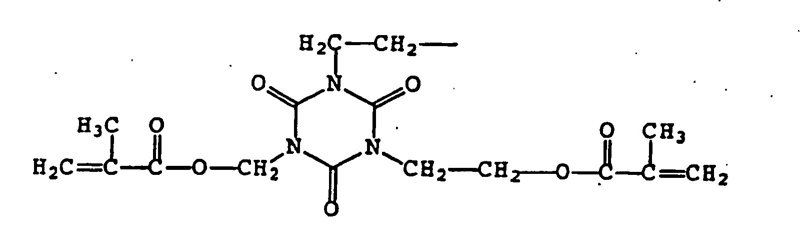 CH₂=CH-O-(CH₂)₃-CH₂-, CH₂=CH-CO-NH-CH₂-, CH₂=CH-CH₂-CH₂=CH-(CH₂)₂-CH₂-, CH₂=CH-CH₂-CH₂-,

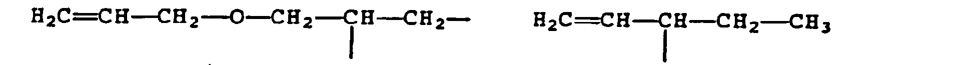

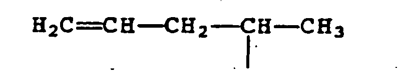

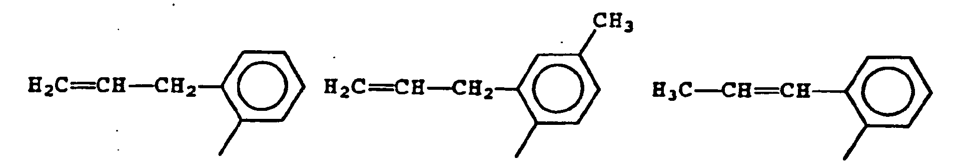

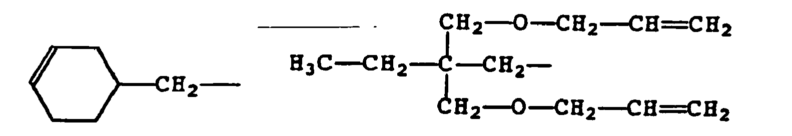

Spezielle Beispiele für Silane der allgemeinen Formel IV mit Epoxidgruppen im Rest Y sind :
Glycidoxymethyltrimethoxysilan, Glycidoxymethyltriethoxysilan, 2-Glycidoxyethyltrimethoxysilan, 2-Glycidoxyethyltriethoxysilan, 3-Glycidoxypropyl-trimethoxysilan, 3-Glycidoxypropyltriethoxysilan, 3-Glycidoxypropyltri(methoxyethoxy)silan, 3-Glycldoxypropyltriacetoxysilan, 4-Glycidoxybutyltrimethoxysilan, 4-Glycidoxybutyltriethoxysilan, Glycidoxymethyl(methyl)dimethoxysilan, Glycidoxymethyl(ethyl)dimethoxysilan, Glycidoxymethyl(phenyl)dimethoxysilan, Glycldoxymethyl(vinyl)dimethoxysilan, Glycidoxymethyl(dimethyl)methoxysilan, 2-Glycidoxyethyl(methyl)-dimethoxysilan, 2-Glycidoxyethyl(ethyl)dimethoxysilan, 2-Glycidoxyethyl(dimethyl)methoxysilan, 3-Glycidoxypropyl(methyl)dimethoxysilan, 3-Glycidoxypropyl-(ethyl)dimethoxysilan, 3-Glycidoxypropyl(dimethyl)methoxysilan, 4-Glycidoxybuyl(methyl)dimethoxysilan, 4-Glycidoxybutyl(ethyl)-dimethoxysilan, 4-Glycidoxybutyl(dimethyl)methoxysilan, Bis-(glycidoxymethyl)dimethoxysilan, Bis-(glycidoxymethyl)diethoxysilan, Bis-(glycidoxyethyl)dimethoxysilan, Bis-(glycidoxyethyl)diethoxysilan, Bis(glycidoxypropyl)dimathoxysilan, Bis-(glycidoxypropyl)diethoxysilan, Tris-(glycidoxymethyl)methoxysilan, Tris-(glycidoxymethyl)ethoxysilan, Tris-(glycidoxyethyl)methoxysilan, Tris-(glycidoxyethyl)ethoxysilan, Tris-(glycidoxypropyl)methoxysilan, Tris-(glycidoxypropyl)ethoxysilan, 3,4- Epoxycyclohexylmethyltrimethoxysilan, 3,4-Epoxyclohexylmethyltriethoxysilan, 3,4-Epoxycyclohexylethyltrimethoxysilan, 3,4-Epoxycyclohexylpropyltrimethoxylan und 3,4-Epoxycyclohexylbutyltrimethoxysilan.

Neben den Silanen der allgemeinen Formel I und IV können noch weitere hydrolytisch kondensierbare Verbindungen des Siliciums oder anderer Elemente aus der Gruppe Al, Ti, Zr, B, P, Sn, Pb, der Übergangsmetalle, der Lanthaniden und der Actiniden entweder als solche oder bereits in vorkondensierter Form zur Herstellung des aufgefundenen Mittels herangezogen werden.

Bevorzugt ist es, wenn mindestens 30 Mol-%, insbesondere mindestens 70 Mol-% und speziell mindestens 90 Mol-%, auf Basis monomerer Verbindungen, der zur Herstellung der Kieselsäureheteropolykondensate des Mittels herangezogenen Ausgangsmaterialien Silicium-Verbindungen sind.

Unter den gegebenenfalls zur Herstellung der Kieselsäureheteropolykondensate des gefundenen Mittels verwendeten hydrolysierbaren Aluminium-Verbindungen sind diejenigen besonders bevorzugt, die die allgemeine Formel AIR°₃ aufweisen, in der die Reste R°, die gleich oder verschieden sind, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Silicium-Verbindungen verwiesen werden. Die soeben genannten Gruppen können auch ganz oder teilweise durch Chelatliganden (z.B. Acetylaceton oder Acefessigsäureester, Essigsäure) ersetzt sein.

Besonders bevorzugte Aluminium-Verbindungen sind Aluminiumalkoxide und-halogenide. In diesem Zusammenhang können als konkrete Beispiele Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-s-C₄H₉)₃, AlCl₃ und AlCl(OH)₂ genannt werden. Bei Raumtemperatur flüssige Verbindungen, wie z.B. Aluminium-sek-butylat und Aluminium-isopropylat, werden besonders bevorzugt.

Geeignete hydrolysierbare Titan- und Zirkonium-Verbindungen, die erfindungsgemäß eingesetzt werden können, sind solche der allgemeinen Formel M Xₖ Rₗ , in der M Titan oder Zirkonium bedeutet, die Reste R und X gleich oder verschieden und wie im Falle der allgemeinen Formeln I und IV definiert sind. Dies gilt auch für die bevorzugten Bedeutungen, k stellt eine ganze Zahl von 1 bis 4 dar, insbesondere 2 bis 4, und 1 steht für 0, 1, 2 oder 3, vorzugsweise für 0, 1 oder 2. Besonders bevorzugt handelt es sich bei diesen Verbindungen um solche, bei denen k gleich 4 ist. Ganz besonders bevorzugt werden Zirkonium-Verbindungen der allgemeinen Formel V eingesetzt,

Zr(OR)₄ (V)

in der R gegebenenfalls substituiertes Alkyl, Alkenyl, Aryl, Alkylaryl oder Arylalkyl darstellt.

Wie im Falle der obigen AI-Verbindungen können auch komplexierte Ti- oder Zr-Verbindungen eingesetzt werden. Zusätzliche bevorzugte Komplexbildner sind hier Acrylsäure und Methacrylsäure.

Konkrete Beispiele für einsetzbare Zr- und TI-Verbindungen sind TICl₄, Ti(OC₂H₅)₄. Ti(OC₃H₇)₄, Ti(O-i-C₃H₇)₄, Ti(OC₄H₉)₄, Ti(2-ethylhexoxy)₄, ZrCl₄, Zr(OC₂H₅)₄, Zr(OC₃H₇)₄, Zr(O-i-C₃H₇)_{4'} Zr(OC₄H₉)₄, Zr(2-ethylhexoxy)₄ und ZrOCl₂.

Weitere hydrolysierbare Verbindungen, die zur Herstellung der Kieselsäureheteropolykondensate des Mittels eingesetzt werden können, sind z.B. Bortrihalogenide und Borsäureester, wie z.B. BCl₃, B(OCH₃)₃ und B(OC₂H₅)₃, Zinntetrahalogenide und Zinntetraalkoxide, wie z.B. SnCl₄ und Sn(OCH₃)₄, und Vanadylverbindungen, wie z.B. VOCl₃ und VO(OCH₃)₃·

Durch den Einsatz von von Silicium-Verbindungen verschiedenen hydrolysierbaren Verbindungen ist es möglich, Heteroatome in das anorganische Netzwerk einzubauen, um damit die Eigenschaften des Antistatikmittel den Anforderungen des jeweiligen Anwendungsfalles anzupassen, z.B. hinsichtlich kratzfester oder optischer Eigenschaften.

Die Silane der allgemeinen Formel I und IV werden entweder alleine oder zusammen mit anderen hydrolytisch kondensierbaren und gegebenenfalls polymerisierbaren Komponenten durch hydrolytische Kondensation zu Kieselsäure(hetero)polykondansatan verarbeitet. Dabei wird durch die hydrolytische Kondensation das anorganische Netzwerk aufgebaut, das durch Zusatz weiterer hydrolytisch kondensierbarer Verbindungen zusätzlich modifiziert werden kann. In dieses Kieselsäure(hetero)polykondensat werden dann weitere Komponenten, wie z.B. Verbindungen der Formel II oder III, durch einfaches Zumischen eingebracht. Es ist aber auch möglich, diese Komponenten bereits vor oder während der hydrolytischen Kondensation zuzusetzen.

Zum Aufbau des anorganischen Netzwerkes, d.h. zur Herstellung des Kieselsäure(hetero)polykondensates werden die Silane der allgemeinen Formel I und/oder II, gegebenenfalls unter Zusatz weiterer hydrolysierbarer Silane sowie anderer cokondensierbarer Komponenten und gegebenenfalls in Anwesenheit eines Katalysators und/oder eines Lösungsmittels durch Einwirken von Wasser oder Feuchtigkeit hydrolysiert und polykondensiert. Diese Polykondensation erfolgt vorzugsweise nach dem Sol-Gel-Verfahren, wie es z.B. in den Offenlegungsschriften DE 2758414, 2758415, 3011761, 3826715 und 3835968 beschrieben ist.

Die Herstellung der Kieselsäure(hetero)polykondensate des gefundenen Mittels kann in der auf dem Gebiet der Poly(hetero)kondensate üblichen Art und Weise erfolgen. Werden praktisch ausschließlich Silicium-Verbindungen eingesetzt, kann die hydrolytische Kondensation in den meisten Fällen dadurch erfolgen, daß man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen des Al, Ti oder Zr, die auch in komplexierter Form vorliegen können, empfiehlt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern es mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylether, Dimethylformamid, Amine, insbesondere Triethylamin, und deren Gemische in Frage.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um Insbesondere bei Verwendung von von Silicium-Verbindungen verschiedenen hydrolysierbaren Verbindungen Ausfällungen während der Hydrolyse und der Polykondensation so weit wie möglich zu vermeiden, kann die Wasserzugabe In mehreren Stufen, z.B. in drei Stufen, durchgeführt werden. Dabei kann in der ersten Stufe z.B. ein Zehntel bis ein Zwanzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensotionszeit richtet sich noch den jeweiligen Ausgangskomponenten und deren Mengenanteilen, dem gegebenenfalls verwendeten Katalysator, der Reaktionstemperatur, etc, im allgemeinen erfolgt die Polykondensation bei Normaldruck, sie kann jedoch euch bei erhöhtem oder bei verringertem Druck durchgeführt werden.

Das so erhaltene Polykondensat Ist lagerstabil und kann bereits als solches oder nach teilweiser oder nahezu vollständiger Entfernung des verwendeten Lösungsmittels bzw. des während der Reaktion gebildeten Lösungsmittels als Antistatikmittel verwendet werden, Es ist ober auch möglich, vor dem bestimmungsgemäßen Einsatz weitere Komponenten (z.B. Härtungsinitiatoren. Pigmente, Lösungsmittel, etc.) zuzugeben. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Polykondensat zu stabilisieren. Zu diesem Zweck kann die Reaktionsmischung z.B. im Vakuum bei leicht erhöhter Temperatur (bis maximal 80 °C) so weit eingedickt werden, daß sie noch problemlos mit einem anderen Lösungsmittel aufgenommen werden kann.

In bevorzugten Ausführungsformen des Mittels sind die Anionen A^{m⊖} der allgemeinen Formel I Hologenid-lonen. Ganz besonders bevorzugt sind Cl^{⊖}-Ionen. In weiteren bevorzugten Ausführungsformen der erfindungsgemäßen Antistatikmittel sind die Kationen K^{n⊕} der allgemeinen Formel I Alkali- oder Erdalkall-Ionen.

In weiteren bevorzugten Ausführungsformen des Mittels werden als Silane der allgemeinen Formel 1, gegebenenfalls in vorkondensierter Form. Cl⊖ H₂C=CH-CH₂-N^{⊕}(CH₃)(CH₂CH=CH₂)-C₃H₆-Si(OCH₃)₃, Cl^{⊖} H₂C=C(CH₃)-CO-O-C₂H₄-N^{⊕}(CH₃)₂-C₃H₆-Si(OCH₃)₃, Cl^{⊖} (CH₃)₃N^{⊕}-C₃H₆-Si(OCH₃)₃, Cl^{⊖} C₁₄H₂₉(CH₃)₂N^{⊕}-C₂H₄-Si(OCH₃)₃, H₂N-C₃H₆-Si(OCH₃)₃, Cl^{⊖} H₃N^{⊕}-C₃H₆-Si(OCH₃)₃, (CH₃)₂N^{⊕}-C₃H₆-Si(OCH₃)₃, Cl^{⊖} (CH₃)₃N^{⊕}H-C₃H₆-Si(OCH₃)₃, H₂N-C₂H₄-NH-C₂H₄-NH-C₂H₄-Si(OCH₃)₃, Cl^{⊖} H₃N^{⊕}-C₂H₄-NH-C₂H₄-NH-C₂H₄-Si(OCH₃)₃, (HO-C₂H₄)₂N-C₂H₄-Si(OC₂H₅)₃ oder Cl^{⊖} (HO-C₂H₄)₂N^{⊕}H-C₂H₄-Si(OC₂H₅)₃ oder eine Mischung derselben eingesetzt.

Enthält das gefundenen Mittels Verbindungen II, so können diese entweder als Amine oder als quartäre Ammonium-Verbindungen zu gesetzt werden. Werden Amine eingesetzt, so kann deren Quaternisierung durch Zugabe entsprechender Verbindungen vor, während oder nach der hydrolytischen Kondensation durchgeführt werden. Derartige Quaternisierungsagenzien sind z.B. HCl oder Alkylhalogenide. Werden Verbindungen II eingesetzt, so ist es bevorzugt, wenn diese eine oder mehrere Acrylat-, Methacrylat-, Acrylsäureamid- oder Methacrylsäureamid-Gruppen tragen. Ganz besonders bevorzugt werden folgende Verbindungen eingesetzt: CH₂=CH-CO-O-C₂H₄-N^{⊕}(CH₃)₃ Cl^{⊖}, CH₂=C(CH₃)-CO-NH-C₃H₆-N(CH₃)₂, CH₂=CH-CO-O-C₂H₄-N(CH₃)₂ oder CH₂=C(CH₃)-CO-NH-C₃H₆-N^{⊕}(CH₃)₃Cl^{⊖}

Das Mittel kann Salze substituierter oder unsubstituierter Acryl- oder Methacrylsäuren enthalten: Besonders bevorzugt sind CH₂=C_{H}-CO-O^{⊖}Li^{⊕}, CH₂=CH-CO-O^{⊖}Na^{⊕}, CH₂=CH-CO-O^{⊖}K^{⊕}, [CH₂=CH-CO-O⊖]₂Ba^{2⊕} oder [CH₂=CH-CO-O^{⊖}]₂Pb^{2⊕} .

Die antistatische Wirkung des Mittels kann durch die Zugabe von heteropolaren Verbindungen weiter gesteigert werden. Bevorzugt werden hierzu LiCl, LiClO₄, HCl oder H₃PO₄ verwendet, oder die folgenden Silane: (CH₃)₃Si-CH₂-CH₂-SO₃^{⊖}Na^{⊕}, (CH₃)₃Si-C=C-CH₂-P^{⊕}(C₆H₅)₃Br^{⊖}, (CH₃)₃Si-CH₂-CH₂-COO^{⊖}Na^{⊕} oder (CH₃)₃Si-O^{⊖}K^{⊕}.

Durch die Zugabe von Aminoalkoholen, z.B. von HO-CH₂-CH₂-NR-CH₂-CH₂-OH, kann die antistatische Wirkung ebenfalls weiter gesteigert werden.

Anhand von Ausführungsbeispielen werden Zusammenshagen von Mittel und dessen Herstellung näher erläutert. Es werden folgende Abkürzungen verwendet:

| | |
|---|---|
| GLYMO : | Glycidoxypropyltrimethoxysilan |
| MI : | Methylimidazol (Hydrolysekatalysator) |
| Silan GF 20 : | 3-Triethoxysilylpropyl-Bernsteinsäureanhydrid |
| MEMO : | 3-Methacryloxypropyltrimethoxysilan |
| MAS | : |

| Beispiel 1: (Vergleichsbeispiel) | | | |
|---|---|---|---|
| Edukte | 1) 0.45 Mol GLYMO | (236.35 g/mol) = | 106.36 g |
| | 2) 0.675 Mol H₂O | (18.00 g/mol) = | 12.15 g |
| | 3) 0.10125Mol MI | (82.11 g/mol) = | 8.31 g |
| | 4) 2-Butoxyethanol | = | 45.00 g |
| | 5) 0.225 Mol Silan GF 20 | (304.40 g/mol) = | 68.49 g |
| | 6) 0,2025 Mol HCI (32 %) | (36.45 g/mol) = | 23.06 g |
| | | | 263.37 g |

### Syntheseablauf :

1), 2) und 3) werden zusammengewogen und 1.5 h bei ca. 20°C gerührt. Es resultiert eine klare Mischung. 4) wird zugekippt und kurz gerührt. 5) wird langsam unter Eiskühlung zugetropft und 1 h gerührt. 6) wird langsam unter Eiskühlung zugetropft. Es resultiert eine farblose, klare Mischung, die nach ca. 30 Minuten Rühren etwas dickflüssig wird. Nach einer Druckfiltration wird die Mischung 15 Minuten ins Ultraschallbad gestellt, bis sie luftfrei ist, und dann zur Beschichtung eingesetzt.

| Beschichtung : | |
|---|---|
| Substrat : | 6 Wippen + 4 Platten |
| Beschichtung : | Tauchschleudern |
| Vorbehandlung : | Ethanol + Ultraschall + Corona |
| Härtung : | 2h /130°C |
| Antistatiktest : | Platten : positiv |
| | Wippen : positiv |
| Haftung : | Platten : 0 - 1 |
| | Wippen: 5 |
| Optik : | Platten : leichte Schlieren |
| | Wippen : keine Schlieren - feine Partikel |

| Beispiel 2 : | | | |
|---|---|---|---|
| Edukte | 1) 0.45 Mol GLYMO | (236.35 g/mol) = | 106.36 g |
| | 2) 0.675 Mol H₂O | (18.00 g/mol) = | 12.15 g |
| | 3) 0.0675 Mol Triethanolamin | (149.19 g/mol) = | 10.07 g |
| | 4) 2-Butoxyethanol | = | 45.00 g |
| | 5) 0.225 Mol Silan GF 20 | (304.40 g/mol) = | 68.49 g |
| | 6) 0.135 Mol LiClO₄ | (106.39 g/mol) = | 14.36 g |
| | 7) 0.0675 Mol HCl (32%) | (36.45 g/mol) = | 7.69 g |
| | | | 264. 11 g |

### Synthaseablauf ;

1), 2) und 3) werden zusammengewogen und 3 h bei ca. 18 - 20°C gerührt. Es resultiert eine klare Mischung. 4) wird zugekippt und kurz gerührt. 5) wird langsam unter Eiskühlung zugetropft und 1 h gerührt. 6) und 7) werden zugegeben und gerührt, bis alles gelöst ist. Es resultiert eine dickflüssige Mischung. Noch einer Druckfiltration wird die Mischung 15 Minuten ins Ultraschallbad gestellt, bis sie luftfrei ist, und dann zur Beschichtung eingesetzt.

| Beschichtung: | |
|---|---|
| Substrat : | 6 Wippen + 4 Platten |
| beschichtung : | Tauchschleudern |
| vorbehandlung : | Ethanol + Ultraschall + Corona |
| Härtung : | 2h/130°C |
| Antistatiktest : | positiv |
| Haftung : | Platten : 0-1 |
| | Wippen : 5 |
| Optik : | leicht gelblich |
| | Platten : leichte Schlieren |
| | Wippen : gut |

| Beispiel 3: (Vergleichsbeispiel) | | | |
|---|---|---|---|
| Edukte | 1)0.28125 Mol G LYMO | (236.35g/.mol) = | 66.47 g |
| | 2) 0.775 Mol H₂O | (18.00 g/mol) = | 13.95 g |
| | 3)0.031 Mol Ml | (82.11 g/mol) = | 2.56 g |
| | 4) 0.2375 Mol N-Trimethoxysilylpropyl- | | |
| | N,N,N,-trimethylammonium- | | |
| | chlorid (50 %-ig) | (257.83 g/mol) = | 122.46 g |
| | 5) 2-Butoxyethonol | = | 28.12 g |
| | 6) 0.140625 Mol Silan GF 20 | (304.40 g/mol) = | 42.81 g |
| | | | 276.36 g |
| | 7) 0.03125 Mol H₃PO₄ (85 %) | (97.97 g/mol) = | 3.60 g |

### Syntheseablauf:

1), 2), 3) und 4) werden zusammengewogen und 3 h bei ca, 18 - 20°C gerührt. Es resultiert eine leicht gelbe Mischung. 5) wird zugekippt und kurz gerührt. 6) wird langsam unter Eiskühlung zugetropft und 1 h gerührt. Es resultiert eine leicht gelbe, klare Mischung. Dann wird 7) zugegeben, 15 Minuten gerührt und filtriert. Die resultierende Mischung wird für die Beschichtung eingesetzt.

| Beschichtung A : | |
|---|---|
| Substrat : | 6 Wippen + 4 Platten |
| Beschichtung : | Tauchen |
| Vorbehandlung : | Ethanol + Ultraschall + Corona |
| Härtung : | 2h/130°C |
| Antistatiktest : | positiv |
| Haftung : 0 - 1 | |
| Optik : | gut keine Schlieren, leicht gelblich |

| Beschichtung B : | Es werden noch 0.015625 Mol = 1.8 g (85%) H₃PO₄. (insgesamt = 0.046875 Mol) zugegeben (= 5.4 g H₃PO₄) |
|---|---|
| Substrat : | 6 Wippen + 4 Platten |
| Beschichtung : | Tauchen |
| Vorbehandlung : | Ethanol + Ultraschall + Corona |
| Härtung : | 22h/130°C |
| Antistatiktest : | positiv |
| Haftung : | Platten : 0-1 |
| | Wippen : 0-1,5 |
| Optik : | gut, leicht gelblich |

| Beispiel 4: (Vergleichsbeispeil) | | | |
|---|---|---|---|
| Edukte | 1) 0.28125 Mol GLYMO | (236.35 g/mol) = | 66.47 g |
| | 2) 0.7525 Mol H₂O | (18.00 g/mol) = | 13.54 g |
| | 3) 0.03125 Mol Mi | (82.11 g/mol) = | 2.56 g |
| | 4) 0.22187 Mol N-Trimethoxysllylpropyl-N, N, N,-trimethylammonium-chlorid (50 %-ig) | (257.83 g/mol) = | 114.41 g |
| | 5) 2-Butoxyethonol | = | 28.12 g |
| | 6) 0.140625 Mol Silan GF 20 | (304.40 g/mol) = | 42.80 g |
| | | | 267.90 g |
| | 7) 0.03125 Mol H₃PO₄ (85 %) | (97.97 g/mol) = | 3.60 g |

### Syntheseablauf :

1), 2), 3) und 4) werden zusammengewogen und 3 h bei ca. 18 - 20°C gerührt. Es resultiert eine leicht gelbe Mischung. 5) wird zugekippt und kurz gerührt. 6) wird langsam unter Eiskühlung zugetropft und 1h gerührt. Es resultiert eine leicht gelbe, klare Mischung. Dann wird 7) zugegeben. 15 Minuten gerührt und filtriert. Die resultierende Mischung wird für die Beschichtung eingesetzt.

| Beschichtung A : | |
|---|---|
| Substrat : | 6 Wippen + 4 Platten |
| Beschichtung : | Tauchen |
| Vorbehandlung : | Ethanol + Ultraschall + Corona |
| Härtung : | 2h / 130°C |
| Antistatiktest : | positiv |
| Haftung : | 0-1 |
| Optik : | gut, keine Schlieren |

| Beschichtung B : | Es werden noch 0.015625 Mol = 1.8 g (85%) H₃PO₄ zugegeben |
|---|---|
| Substrat : | 6 Wippen + 4 Platten |
| Beschichtung : | Tauchen |
| Vorbehandlung : | Ethanol + Ultraschall + Corona |
| Härtung : | 2h/130 °C |
| Antistatiktest : | positiv |
| Haftung : | Platten : 0-1 |
| | Wippen : 5 |
| Optik : | gut, keine Schlieren, vereinzelt Partikel |

| Beispiel 5: | | | |
|---|---|---|---|
| Edukte | 1) 0.90 mol MEMO | (248.35 g/mol) = | 223.5 g |
| | 2) 1.35 mol H₂O | (18.00 g/mol) = | 24.3 g |
| | 3) 0.18 mol Zr(OPr)₄ (74,6%) | (327.58 g/mol) = | 79.04 g |
| | 4)0.18 mol MAS | (89.09 g/mol) = | 21.30 g |
| | 5) 0.27 mol H₂O | (18.00 g/mol) = | 4.86 g |
| | 6) 0.27 mol LlClO₄ | (106.39 g/mol) = | 28.71 g |
| | | | 388.71 g |

### Synthesablauf :

Das Vorhydrolysat aus 1) und 2) wird über Nacht gerührt, bis es klar ist. 3) wird vorgelegt. 4) wird langsam unter Eiskühlung zugetropft, und die resultierende Mischung wird 30 Minuten gerührt. Es resultiert eine gelbe, klare Mischung. Das Vorhydrolysat aus 1) und 2) wird dazu gegeben und 30 Minuten-gerührt. 5) wird langsam unter Eiskühlung zugetropft. Anschließend wird 1 h bei RT gerührt. 6) wird zugewogen. Dann wird gerührt bis alles gelöst ist, unter Druck filtriert und für die Beschichtung eingesetzt.

| Beschichtung : | |
|---|---|
| Substrat : | 6 Wippen + 4 Platten |
| Vorbehandlung : | Ethanol + Ultraschall + Corona |
| Härtung : | 2h/130°C |
| Antistatiktest : | positiv |
| Optik : | gut, leichte, gelbe Färbung |

| Beispiel 6 : | | | |
|---|---|---|---|
| Edukte | 1) 0.90 mol MEMO | (248.35 g/mol) | = 223.5 g |
| | 2) 1.35 mol H₂O | (18.00 g/mol) | = 24.3 g |
| | 3) 0.18 mol Zr(OPr)₄ (74,6%) | (327.58 g/mol) | = 79.04 g |
| | 4) 0.18. mol MAS | (89.09 g/mol) | = 21.30 g |
| | 5) 0.27 mol Ammoniumocrylat (80%) | (207.70 g/mol) | = 70.10 g |
| | | | 418.24 g |

### Synthesablauf :

Das Vorhydrolysat aus 1) und 2) wird über Nacht gerührt, bis es klar ist. 3) wird vorgelegt, 4) wird langsam unter Eiskühlung zugetropft, und die resultierende Mischung wird 30 Minuten gerührt. Es resultiert eine gelbe, klare Mischung. Das Vorhydrolysat aus 1) und 2) wird dazu gegeben und 30 Minuten gerührt. 5) wird langsam unter Eiskühlung zugetropft. Anschließend wird 1 h bei RT gerührt. Dann wird unter Druck filtriert und die resultierende Mischung wird für die Beschichtung eingesetzt.

| Beschichtung | |
|---|---|
| Additive : | 1.5 % IRG 184 g = 6.27 g |
| Substrat : | 6 Wippen + 4 Platten |
| Vorbehandlung : | Ethanol + Ultraschall + Corona |
| Härtung : | 2 UV-Lampen ½ Leistung 0.6 m/min |
| Antistatiktest : | positiv |
| Optik : | gut, leichte, gelbe Färbung |

Die antistatische Wirkung wurde qualitativ nach folgender Methode überprüft. Noch intensivem Reiben mit einem Tuch auf der beschichteten Oberfläche wird die Oberfläche mit ca, 1 cm Abstand über feine Asche gehalten. Bei unbeschichteten Teilen und bei Beschichtungen ohne antistatische Modifikation wurden sofort Ascheteilchen von der Oberfläche angezogen. Bei allen mit dem erfindungsgemäßen Antistatikmittel beschichteten Oberflächen wurde dies nicht beobachtet.

Mit den gemäß den Beispielen 1 bis 6 beschiebenen Mittels wurden Polycarbonatscheiben beschichtet. Anschließend wurden die Oberflächenwiderstände gemessen. Die folgende Tabelle zeigt die Ergebnisse.

| Beispiel | Widerstand bei 100 V [Ω] | Widerstand bei 1000 V [Ω] |
|---|---|---|
| 1 *Vergleichsbeispiele | 10¹¹ | 10¹¹ |
| 2 | 10¹¹ | 10¹¹ |
| 3 | 10⁷ | 10⁷ |
| 4 | 10⁷ | 10⁷ |
| 5 | 10¹⁰ | 10¹⁰ |
| 6 | 10¹¹ | 10¹¹ |

| | | |
|---|---|---|
| *Vergleichsbeispiele | | |

## Patentansprüche

1. Verwendung eines Mittels bestehend aus einem organisch-anorganischen Netzwerk, das aus Kieselsäure-(hetero)polykondensaten erhalten worden ist durch hydrolytische (Teil)Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirken von Wasser oder Feuchtigkeit und gegebenenfalls in Anwesenheit eines Katalysators und/oder eines Lösungsmittels;
- 0 bis 35 Mol-% der hydrolytisch (teil)kondensierten Verbindungen, auf der Basis monomerer Verbindungen, hergeleitet von Silicium-Verbindungen der allgemeinen Formel I,
ZₐSiX_{b}R (_{4-a-b}) (I)
in der die Reste und Indices gleich oder verschieden sind und folgende Bedeutung haben:
| | |
|---|---|
| X = | Wasserstoff, Halogen, Hydroxy, gegebenenfalls substituiertes Alkoxy, Acyloxy, Alkylcarbonyl, Alkoxycarbonyl oder NR'₂ ; |
| Z = | R²₂N-(R³-NR²⁻) ₖ-R³-, 1/ₘ A^{m-}R²₃ N⁺-R ³-, (HO-R³-)₂ N-R³-, Cl-SO₂-R³-, (R²O)₂ P(O)-R³-, 1/ₘ A^{m-} (R²₂N)₂ C=S⁺-R³-, 3/ₙKⁿ⁺ (⁻OOC)₂ N-R³-N (COO⁻) -R³-, |
| | |
|---|---|
| | 1/ₘ A^{m-} H₂C=C (R²) -R³-N⁺ (R²₂) -R³- oder 1/ₘ A^{m-} H₂C=C (R²)-CO-O-R³-N⁺ (R²₂) -R³- oder davon abgeleitete quartäre Ammoniumsalze; |
| R = | gegebenenfalls substituiertes Alkyl, Alkenyl, Aryl, Alkylaryl oder Arylalkyl; |
| R' = | Wasserstoff, Alkyl oder Aryl; |
| R² = | Wasserstoff, gegebenenfalls substituiertes Alkyl, Alkenyl, Aryl, Alkylaryl oder Arylalkyl; |
| R³ = | gegebenenfalls substituiertes Alkylen, Alkenylen oder Arylen; |
| A^{m-} = | Anion mit der Ladungszahl m |
| Kⁿ⁺ = | Kation mit der Ladungszahl n |
| a = | 1, 2 oder 3; |
| b = | 1, 2 oder 3; |
| a+b | = 2, 3 oder 4; |
| k | = 0, 1, 2 oder 3, |
und von einer oder mehreren Verbindungen der allgemeinen Formel IV
Xₐ R_{b} Si Y_{c} (IV)
hergeleitet, in der die Reste und Indices folgende Bedeutung haben:
| | |
|---|---|
| R = | Alkyl, Alkenyl, Aryl, Alkylaryl oder Arylalkyl; |
| X = | Wasserstoff, Halogen, Hydroxy, Alkoxy, Acyloxy, Alkylcarbonyl, Alkoxycarbonyl oder NR'₂, mit R' = Wasserstoff, Alkyl oder Aryl; |
| Y = | geradkettiger oder verzweigter organischer Rest mit 2 bis 50 Kohlenstoff Atomen, der durch Sauerstoff- und/oder durch Schwefelatome und/oder durch Aminogruppen unter- |
brochen sein kann und der mindestens eine C=C-Doppelbindung und/oder mindestens eine Epoxid-Gruppe aufweist;
a = 1, 2 oder 3;
b = 0, 1 oder 2;
c = 1,2 oder 3, mit a + b + c = 4.
- auf der Basis monomerer Verbindungen und bezogen auf das Kieselsäure(hetero)polykondensat und die Verbindungen II und III, 0 bis 30 Mol-% einer oder mehrerer Verbindungen II, die Amine und/oder quartäre Ammonium-Verbindungen darstellen, und die jeweils einen oder mehrere organische Reste mit einer oder mehreren polymerisierbaren und/oder polyaddierbaren Gruppen tragen;
- auf der Basis monomerer Verbindungen und bezogen auf das Kieselsäure(hetero)polykondensat und die Verbindungen II und III, 0 bis 30 Mol-% einer oder mehrerer Verbindungen III, die Salze der, gegebenenfalls substituierten, Acrylsäure und/oder der, gegebenenfalls substituierten, Methacrylsäure darstellen;
- die Summe der Verbindungen I, II und III beträgt, bezogen auf das Kieselsäure(hetero)polykondensat und die Verbindungen II und III, auf der Basis monomerer Verbindungen, 1 bis 30 Mol-% als Antistatikmittel zur Herstellung antistatischer Beschichtungen.

2. Verwendung nach Anspruch 1,
**dadurch gekennzeichnet, dass** das Mittel (teil)kondensierte Zirkonium-Verbindungen enthält, die sich von einer oder mehreren Verbindungen der allgemeinen Formel V ableiten,
Zr(OR)₄ (V)
in der R gegebenenfalls substituiertes Alkyl, Alkenyl, Aryl, Alkylaryl oder Arylalkyl darstellt.

3. Verwendung nach Anspruch 1 oder 2,
**dadurch gekennzeichnet, dass** das Mittel eine oder mehrere heteropolare Verbindungen enthält.

4. Verwendung nach Anspruch 3,
**dadurch gekennzeichnet, dass** es LiCl und/oder LiClO₄ und/oder HCl und/oder H₃PO₄ enthält.

5. Verwendung nach Anspruch 3,
**dadurch gekennzeichnet, dass** es (CH₃)₃SiCH₂-CH₂SO₃⁻Na⁺ und/oder (CH₃)₃Si-C=C-CH₂-P⁺(C₆H₅)₃Br⁻und/oder (CH₃)₃Si -CH₂-CH₂-COO⁻Na⁺ und/oder (CH₃) ₃Si-O⁻K⁺ enthält.

6. Verwendung nach einem oder mehreren der Ansprüche 1 bis 5,
**dadurch gekennzeichnet, dass** das Mittel einen oder mehrere Aminoalkohole enthält.

7. Verwendung nach einem oder mehreren der Ansprüche 1 bis 6,
**dadurch gekennzeichnet, dass** das Mittel eine oder mehrere Verbindungen II enthält, die eine oder mehrere Acrylat-, Methacyrlat-, Acrylsäureamid- oder Methacrylsäureamid-Gruppen tragen.

8. Verwendung nach Anspruch 7,
**dadurch gekennzeichnet, dass** es CH₂=CH-CO-O-C₂H₄-N (CH₃)₂, CH₂=CH-CO-O-C₂H₄-N⁺(CH₃)₃Cl⁻, CH₂=C (CH₃) - CO-NH-C₃H₆-N (CH₃) ₂ oder CH₂=C (CH₃) -CO-NH-C₃H₆-N⁺ (CH₃)₃Cl⁻ enthält .

9. Verwendung nach einem oder mehreren der Ansprüche 1 bis 8,
**dadurch gekennzeichnet, dass** das Mittel eine oder mehrere Verbindungen III der Formel CH₂=CH-CO-O⁻Li⁺, Ch₂=CH-CO-O⁻Na⁺, CH₂=CH-CO-O⁻K⁺, [CH₂=CH-CO-O⁻]₂Ba²⁺ oder [CH₂=CH-CO-O⁻]₂Pb²⁺ enthält.

10. Verwendung nach einem oder mehreren der Ansprüche 1 bis 9,
**dadurch gekennzeichnet, dass** in der allgemeinen Formel I die Anionen A^{m-} Halogenid-Ionen
und/oder die Kationen Kⁿ⁺ Alkali- oder Erdalkali-Ionen darstellen.

11. Verwendung nach einem oder mehreren der Ansprüche 1 bis 10,
**dadurch gekennzeichnet, dass** das Mittel (teil)kondensierte Silane enthält, die sich von Cl⁻H₂C=CH-CH₂-N⁺(CH₃)(CH₂CH=CH₂)-C₃H₆-Si(OCH₃)₃, Cl⁻H₂C=C(CH₃)-CO-O-C₂H₄-N⁺(CH₃)₂-C₃H₆-Si(OCH₃)₃, Cl⁻(CH₃)₃N⁺-C₃H₆-Si(OCH₃)₃, Cl⁻C₁₄H₂₉(CH₃)₂N⁺-C₂H₄-Si(OCH₃)₃, H₂N-C₃H₆-Si(OCH₃)₃, Cl⁻H₃N⁺-C₃H₆-Si(OCH₃)₃, (CH₃)₃N⁺-C₃H₆-Si(OCH₃)₃, Cl⁻(CH₃)₂N⁺H-C₃H₆-Si(OCH₃)₃, H₂N-C₂H₄-NH-C₂H₄-NH-C₂H₄-Si(OCH₃)₃, Cl⁻H₃N⁺-C₂H₄-NH-C₂H₄-NH-C₂H₄-Si(OCH₃)₃, (HO-C₂H₄)₂N-C₂H₄-Si(OC₂H₅)₃ oder Cl⁻(HO-C₂H₄)₂N⁺H-C₂H₄-Si(OC₂H₅)₃ oder Mischungen derselben ableiten.

## Claims

1. Use of an agent consisting of an organic-inorganic network that is obtained from silicic acid (hetero)polycondensates by the hydrolytic (partial) condensation of one or more hydrolytically condensable compounds of the silicon and, if necessary, of other elements from the group B, Al, P, Sn, Pb, transitional metals, lanthanoids and actinoids, and / or of precondensates derived from the above compounds by the action of water or moisture and, if necessary, in the presence of a catalyst and /or of a solvent;
- 0 to 35 mol-% of the hydrolytically (partially) condensed compounds, on the basis of monomeric compounds derived from silicon compounds having the general formula I,
ZₐSiX_{b}R (_{4-a-b}) (I)
in which the groups and indices are the same or different, and have the following meaning:
X = hydrogen, halogen, hydroxy, if necessary substituted alkoxy, acyloxy, alkylcarbonyl, alkoxycarbonyl or NR'₂;
Z=R²₂N-(R³-NR²-)ₖ-R³-, 1/ₘ A^{m-}R²₃N⁺- R³, (HO-R³-)₂ N-R³-, Cl-SO₂-R³-, (R²O)₂ P(O) -R³-, 1/ₘ A^{m-} (R²₂N)₂ C=S⁺-R³-3/ₙKⁿ⁺ (⁻OOC)₂ N-R³-N (COO⁻)-R³-, 1/ₘ A^{m-} H₂C=C(R²)-R³-N⁺ (R²₂) -R³- or 1/ₘ A^{m-} H₂C=C(R²)-CO-O-R³-N⁺ (R²₂)-R³- or quaternary ammonium salts derived therefrom;
R = alkyl, alkenyl, aryl, alkylaryl or arylalkyl, substituted if necessary;
R' = hydrogen, alkyl or aryl;
R² = hydrogen; alkyl, alkenyl, aryl, alkylaryl or arylalkyl, substituted if necessary;
R³ = alkylene, alkenylene or arylene, substituted if necessary
A ^{m-} = anion with the charge number m
Kⁿ⁺ = cation with the charge number n
a = 1, 2 or 3;
b=1, 2 or 3;
a+b = 2, 3 or 4;
k=0, 1, 2 or 3
and derived from one or more compounds having the general formula IV
Xₐ R_{b} Si Y_{c} (IV)
in which the groups and indices have the following meaning:
R = alkyl, alkenyl, aryl, alkylaryl or arylalkyl;
X = hydrogen, halogen, hydroxy, alkoxy, acyloxy, alkylcarbonyl, alkoxycarbonyl or NR'₂, with R' = hydrogen, alkyl or aryl;
Y = straight-chain or branched organic group with between 2 and 50 carbon atoms, which group can be interrupted by oxygen atoms and /or sulphur atoms and / or amino groups, and which has at least one C=C-double bond and / or at least one epoxide group;
a=1,2 or 3;
b=0, 1 or 2;
c=1,2 or 3, where a+b+c=4.
- on the basis of monomeric compounds and related to the silicic acid (hetero)polycondensate and compounds II and III, 0 to 30 mol-% of one or more compounds II, which represent amines and / or quaternary ammonium compounds and which each carry one or more organic groups with one or more polymerisable and / or polyaddable groups;
- on the basis of monomeric compounds and related to the silicic acid (hetero)polycondensate and compounds II and III, 0 to 30 mol-% of one or more compounds III, which represent salts of - substituted if necessary - acrylic acid and / or - substituted if necessary - methacrylic acid;
- is the total of the compounds I, II and III, related to the salicic acid (hetero)polycondensate and compounds II and III, on the basis of monomeric compounds, 1 to 30 mol-% as an antistatic agent for the manufacture of antistatic coatings.

2. Use as in claim 1,
**characterised in that**
the agent contains (partially) condensed zirconium compounds which are derived from one or more compounds of the general formula V
Zr(OR)₄ (V)
in which R represents alkyl, alkenyl, aryl, alkylaryl or arylalkyl, substituted if necessary.

3. Use as in claim 1 or 2,
**characterised in that**
the agent contains one or more heteropolar compounds.

4. Use as in claim 3,
**characterised in that**
it contains LiCl and / or LiC10₄ and / or HCl and / or H₃PO₄.

5. Use as in claim 3,
**characterised in that**
it contains (CH₃) ₃ SiCH₂-CH₂SO₃⁻Na⁺ and / or (CH₃) ₃ Si-C=C-CH₂-P⁺(C₆H₅) ₃Br⁻ and / or (CH₃) ₃Si-CH₂- CH₂-COO⁻Na⁺ and / or (CH₃) ₃ Si-O⁻K⁺.

6. Use as in one or more of claims 1 to 5,
**characterised in that**
the agent contains one or more amino-alcohols.

7. Use as in one or more of claims 1 to 6,
**characterised in that**
the agent contains one or more compounds II, which carry one or more acrylate, methacrylate, acrylamide or methacrylamide groups.

8. Use as in claim 7,
**characterised in that**
it contains CH₂=CH-CO-O-C₂H₄-N(CH₃) ₂, CH₂=CH-CO-O-C₂H₄-N⁺ (CH₃) ₃Cl⁻, CH₂=C(CH₃)-CO-NH-C₃H₆-N(CH₃) ₂ or CH₂=C(CH₃)-CO-C₃H₆-N⁺ (CH₃) ₃ Cl⁻.

9. Use as in one or more of claims 1 to 8,
**characterised in that**
the agent contains one or more compounds III of the formula CH₂=CH-CO-O⁻Li⁺, Ch₂=CH-CO-O⁻Na⁺, CH₂=CH-CO-O⁻K⁺, [CH₂=CH-CO-O⁻] ₂Ba²⁺ or [CH₂=CH-CO-O⁻] ₂Pb²⁺.

10. Use as in one or more of claims 1 to 9,
**characterised in that**
in the general formula I, the anions A^{m-} represent halogenide ions and / or the cations Kⁿ⁺ represent alkali ions or alkaline earth ions.

11. Use as in one or more of claims 1 to 10,
**characterised in that**
the agent contains (partially) condensed silanes which are derived from Cl⁻H₂C=CH-CH₂-N⁺(CH₃)(CH₂CH=CH₂)-C₃H₆-Si(OCH₃)₃, Cl⁻H₂C=C(CH₃)-CO-O-C₂H₄-N⁺(CH₃)₂-C₃H₆-Si(OCH₃)₃, Cl⁻(CH₃)₃N⁺ -C₃H₆-Si(OCH₃)₃, Cl⁻C₁₄H₂₉(CH₃)₂N⁺-C₂H₄-Si(OCH₃)₃, Cl⁻H₃N⁺ - C₃H₆-Si(OCH₃)₃, (CH₃)₃N⁺-C₃H₆-Si (OCH₃)₃, (CH₃)₃N⁺-C₃H₆-Si (OCH₃)₃, Cl⁻(CH₃)₂N⁺H-C₃H₆-Si(OCH₃)₃, H₂N-C₂H₄-NH-C₂H₄-NH-C₂H₄-Si(OCH₃)₃, Cl⁻H₃N⁺ - C₂H₄-NH- C₂H₄-Si (OCH₃)₃, (HO- C₂H₄) ₂N- C₂H₄ -Si (OC₂H₅) ₃, or Cl⁻(HO- C₂H₄) ₂N⁺H- C₂H₄ -Si (OC₂H₅)₃ or mixtures thereof.

## Revendications

1. Utilisation d'un agent constitué d'un réseau organique-anorganique qui a été obtenu à partir d'(hétéro)polycondensats d'acide silicique par condensation (partielle) hydrolytique d'un ou de plusieurs composés du silicium pouvant être condensés hydrolytiquement, et optionnellement d'autres éléments du groupe B, Al, P, Sn, Pb, des métaux de transition, des lanthanides et des actinides, et/ou de précondensats dérivés des composés mentionnés ci-dessus, par action d'eau ou d'humidité et optionnellement en présence d'un catalyseur et/ou d'un solvant ;
- 0 à 35 % en moles des composés (partiellement) condensés hydrolytiquement, sur la base des composés monomères, sont dérivés de composés de silicium de la formule générale (I)
ZₐSᵢX_{b}R_{(4-a-b)} (I)
dans laquelle les radicaux et les indices sont identiques ou différents, et ont la signification suivante :
| | |
|---|---|
| X = | hydrogène, halogène, hydroxy, ou alkoxy, acyloxy, alkylcarbonyle, alkoxycarbonyle ou NR'₂ optionnellement substitués ; |
| Z = | R²₂N-(R³-NR²⁻)ₖ-R³⁻-, 1/ₘ A^{m-}R²₃N⁺-R³-, (HO-R³-)₂N-R³-, Cl-SO₂-R³-, (R²O)₂P(O)-R³-, 1/ₘ A^{m-} (R²₂N)₂ C=S⁺-R³-, 3/ₙKⁿ⁺(⁻OOC)₂N-R³-N(COO⁻)-R³-, 1/ₘA^{m-} H₂C=C(R²)-R³-N⁺(R²₂)-R³- ou 1/ₘ A^{m-} H₂C=C(R²)-CO-O-R³-N⁺(R²₂)-R³ - |
ou sels d'ammonium quaternaires qui en sont dérivés ;
R = alkyle, alkényle, aryle, alkylaryle ou arylalkyle optionnellement substitués ;
R' = hydrogène, alkyle ou aryle ;
R² = hydrogène, ou alkyle, alkényle, aryle, alkylaryle ou arylalkyle optionnellement substitués ;
R³ = alkyles, alkényles ou aryles optionnellement substitués;
A^{m-} = anion de valence m
Kⁿ⁺ = cation de valence n
a = 1, 2 ou 3 ;
b = 1, 2 ou 3 ;
a+b = 2, 3 ou 4 ;
k = 0, 1, 2 ou 3,
et sont dérivés d'un ou plusieurs composés de la formule générale IV
Xₐ R_{b} Sᵢ Yₑ (IV)
dans laquelle les radicaux et les indices ont la signification suivante :
R = alkyle, alkényle, aryle, alkylaryle ou arylalkyle ;
X = hydrogène, halogène, hydroxy, alkoxy, acyloxy, alkylcarbonyle, alkoxycarbonyle ou NR'₂, avec R' = hydrogène, alkyle ou aryle ;
Y = radical organique linéaire ou ramifié ayant 2 à 50 atomes de carbone, qui peut être interrompu par des atomes d'oxygène et/ou de soufre et/ou par des groupes amino, et qui présente au moins une double liaison C=C et/ou au moins un groupe époxyde ;
a = 1, 2 ou 3 ;
b = 0, 1 ou 2 ;
c= 1, 2 ou3, avec a+b+c=4.
- sur la base des composés monomères et rapporté à l'(hétéro)polycondensat d'acide silicique et aux composés II et III, 0 à 30 % en moles d'un ou de plusieurs composés II, qui représentent des amines et/ou des composés d'ammonium quaternaires, et qui portent chacun un ou plusieurs radicaux organiques comportant un ou plusieurs groupes aptes à la polymérisation et/ou à la polyaddition ;
- sur la base des composés monomères et rapporté à l'(hétéro)polycondensat d'acide silicique et aux composés II et III, 0 à 30 % en moles d'un ou de plusieurs composés III, qui représentent des sels de l'acide acrylique optionnellement substitué et/ou de l'acide méthacrylique optionnellement substitué ;
- la somme des composés I, II et III s'élève, rapporté à l'(hétéro)polycondensat d'acide silicique et aux composés II et III, sur la base des composés monomères, à 1 à 30 % en moles sous la forme d'un agent antistatique pour la fabrication de revêtements antistatiques.

2. Utilisation selon la revendication 1, **caractérisée en ce que** l'agent contient des composés de zirconium (partiellement) condensés, qui sont dérivés d'un ou plusieurs composés de la formule générale V,
Zr (OR)₄ (V)
dans laquelle R représente un alkyle, alkényle, aryle alkylaryle ou arylalkyle optionnellement substitués.

3. Utilisation selon la revendication 1 ou 2, **caractérisée en ce que** l'agent contient un ou plusieurs composés hétéropolaires.

4. Utilisation selon la revendication 3, **caractérisée en ce qu'**il contient du LiCl et/ou du LiClO₄ et/ou du HCl et/ou du H₃PO₄.

5. Utilisation selon la revendication 3, **caractérisée en ce qu'**il contient du (CH₃)₃SiCH₂-CH₂SO₃⁻Na⁺ et/ou du (CH₃)₃Si-C=C-CH₂-P⁺(C₆H₅)₃Br⁻ et/ou du (CH₃)₃Si-CH₂-CH₂-COONa⁺ et/ou du (CH₃)₃Si-O⁻K⁺.

6. Utilisation selon une ou plusieurs des revendications 1 à 5, **caractérisée en ce que** l'agent contient un ou plusieurs aminoalcools.

7. Utilisation selon une ou plusieurs des revendications 1 à 6, **caractérisée en ce que** l'agent contient un ou plusieurs composés II qui portent un ou plusieurs groupes acrylate, méthacrylate, amide de l'acide acrylique ou amide de l'acide méthacrylique.

8. Utilisation selon la revendication 7, **caractérisée en ce qu'**il contient du CH₂=CH-CO-O-C₂H₄-N(CH₃)₂, du CH₂=CH-CO-O-C₂H₄-N⁺(CH₃)₃Cl⁻, du CH₂=C(CH₃)-CO-NH-C₃H₆-N(CH₃)₂ ou du CH₂=C(CH₃)-CO-NH-C₃H₆-N⁺(CH₃)₃Cl⁻.

9. Utilisation selon une ou plusieurs des revendications 1 à 8, **caractérisée en ce que** l'agent contient un ou plusieurs composés III de la formule CH₂=CH-CO-O⁻Li⁺, CH₂=CH-CO-O⁻Na⁺, CH₂=CH-CO-O⁻K⁺, [CH₂=CH-CO-O⁻]₂Ba²⁺ ou [CH₂=CH-CO-O⁻]₂Pb²⁺.

10. Utilisation selon une ou plusieurs des revendications 1 à 9, **caractérisée en ce que** dans la formule générale I, les anions A^{m-} représentent des ions halogénure et/ou les cations Kⁿ⁺ représentent des ions alcalins ou alcalino-terreux.

11. Utilisation selon une ou plusieurs des revendications 1 à 10, **caractérisée en ce que** l'agent contient du silane (partiellement) condensé, qui est dérivé de Cl⁻H₂C=CH-CH₂-N⁺(CH₃)(CH₂CH=CH₂)-C₃H₆-Si(OCH₃)₃, Cl⁻H₂C=C(CH₃)-CO-O-C₂H₄-N⁺(CH₃)₂-C₃H₆-Si(OCH₃)₃, Cl⁻(CH₃)₃N⁺-C₃H₆-Si(OCH₃)₃, Cl⁻C₁₄H₂₉(CH₃)₂N⁺-C₂H₄-si(OCH₃)₃, H₂N-C₃H₆-Si(OCH₃)₃, Cl⁻H₃N⁺-C₃H₆-Si(OCH₃)₃, (CH₃)₃N⁺-C₃H₆-Si(OCH₃)₃, Cl⁻(CH₃)₂N⁺H-C₃H₆-Si(OCH₃)₃, H₂N-C₂H₄-NH-C₂H₄-NH-C₂H₄-Si(OCH₃)₃, Cl⁻H₃N⁺-C₂H₄-NH-C₂H₄-NH-C₂H₄-Si(OCH₃)₃, (HO-C₂H₄)₂N-C₂H₄-Si(OC₂H₅)₃ ou Cl⁻(HO-C₂H₄)₂N⁺H-C₂H₄-Si(OC₂H₅)₃ ou des mélanges de ces derniers.
